# EUROPÄISCHE PATENTSCHRIFT

(11) **EP 1 055 835 B1**
(45) Veröffentlichungstag und Bekanntmachung des Hinweises auf die Patenterteilung: **03.12.2003**
(21) Anmeldenummer: 00107227.1
(22) Anmeldetag: 01.04.2000
(51) Int. Cl.: F16D 25/10

(54) **Schalt-Zahnkupplung**
Shifting toothed clutch
Embrayage à dents commutables

(30) Priorität: 28.05.1999 DE 19924512
(43) Veröffentlichungstag der Anmeldung: 29.11.2000
(73) Patentinhaber: CLAAS Industrietechnik GmbH, 33106 Paderborn (DE)
(72) Erfinder: Fredriksen, Nils, 33428 Harsewinkel (DE); Brockschmidt, Detlev, 32052 Herford (DE); Obermeier-Hartmann, Robert, 33142 Büren (DE)
(74) Vertreter: Gramm, Werner, Prof. Dipl.-Ing.

(56) Entgegenhaltungen:
- DE-A- 3 815 638
- DE-C- 3 903 877
- FR-A- 2 388 173

## Beschreibung

Die Erfindung betrifft eine Schalt-Zahnkupplung in einem leistungsverzweigten Lastschaltgetriebe, in dem einer stufenlosen Drehzahlverstellvorrichtung mehrere mittels zumindest einer Schalt-Zahnkupplung schaltbare Gangstufen nachgeordnet sind und der Gangwechsel bei annähernd synchronen Abtriebs-Drehzahlen der zu schaltenden Gänge erfolgt.

Der DE 39 03 877 C1 läßt sich ein stufenlos wirkendes, hydrostatisch-mechanisches Lastschaltgetriebe mit Schalt-Zahnkupplungen entnehmen.

Die DE 39 43 770 C2 offenbart eine vergleichbare Schalt-Zahnkupplung für ein hydrostatisch-mechanisches Verzweigungsgetriebe. Die Kupplungsanordnung ist als koaxiale Doppelkupplung ausgebildet, die einen auf einem rotierenden Getriebeteil drehfest und achsfest angeordneten Kupplungsträger aufweist. Die Kolben sind als Einzelkolben ausgebildet, die über eine eine Momentenübertragung sowie eine Axialverschiebung ermöglichende Verzahnung mit dem Kupplungsträger verbunden sind. Jeder Kolben hat einen einzigen separat ansteuerbaren Druckraum, wobei die neutrale Schaltstellung durch ein Federelement bei gleichzeitiger Druckentlastung bewerkstelligt wird. Zum Einschalten eines Ganges wird Druck aufgebracht.

Die DE 40 38 170 A1 offenbart ein für ein mehrstufiges Ganggetriebe vorgesehenes Dreistellungszylindersystem mit einem Stellzylinder mit einem doppelseitig druckmittelbeaufschlagbaren, über Steuerorgane steuerbaren Kolben, der mit einem Schaltelement gekoppelt ist. Dabei ist der Kolben aus zwei entgegengesetzt wirkenden, in einem gemeinsamen Zylindergehäuse verschiebbaren Doppelkolben gebildet, wobei jedem der beiden Doppelkolben im Zylindergehäuse ein Druckraum mit einem Druckmittelanschluß zugeordnet ist. Der erste Kolben jedes Doppelkolbens ist mit dem Schaltelement bewegungsstarr und der zweite Kolben jedes Doppelkolbens mit dem ersten Kolben freiverschieblich verbunden. Die beiden Doppelkolben sind bei beiderseitigem Druckausgleich mit ihrem freiverschieblichen zweiten Kolben gegen einen Anschlag des Zylindergehäuses in der Neutralstellung gehalten. Die beiden Doppelkolben sind wechselweise bei jeweils einseitiger Druckbeaufschlagung aus der Neutralstellung verschiebbar, wobei der drucklose Doppelkolben mit seinen beiden Kolben des druckbeaufschlagten Doppelkolbens seine Schaltverschiebung erhält. Die beiden Doppelkolben sind mit ihren beiden Kolben koaxial angeordnet. Der Kupplungsträger ist durch ein gehäusefestes Bauteil gebildet.

Der Erfindung liegt die Aufgabe zugrunde, für die eingangs beschriebene Schalt-Zahnkupplung eine kompakt bauende, funktionssicher arbeitende Ausführungsform zu entwickeln.

Ausgehend von der eingangs beschriebenen Schalt-Zahnkupplung wird diese Aufgabe erfindungsgemäß dadurch gelöst, dass die Schalt-Zahnkupplung als koaxiale Doppel-Differentialkupplung ausgebildet ist, die einen auf einem rotierenden Getriebeteil, vorzugsweise einer Kupplungswelle drehfest und achsfest angeordneten Kupplungsträger aufweist, auf dem ein doppelseitig mit einem Druckmittel beaufschlagbarer, als Schaltbrücke ausgebildeter Doppelkolben gelagert ist, der über eine eine Momentenübertragung sowie eine Axialverschiebung ermöglichende Verzahnung mit dem Kupplungsträger in Wirkverbindung steht, auf seinen sich axial gegenüberliegenden Stirnseiten je eine Schaltverzahnung trägt und von zwei separat ansteuerbaren Druckräumen beaufschlagbar ist, die bei gleichzeitiger Druckbeaufschlagung die Schaltbrücke in ihrer neutralen Mittelstellung halten bzw. in diese Mittelstellung verschieben, während die Einschaltung eines der beiden den Schaltverzahnungen zugeordneten Gängen durch Drucklosschaltung des dem anderen Gang zugeordneten Druckraumes erfolgt.

Dabei ist es konstruktiv zweckmäßig, wenn der Kupplungsträger mit einem Führungsabschnitt zwischen die beiden von der Schaltbrücke umschlossenen Druckräume ragt und zwei einander axial gegenüberliegende, jeweils in einen der beiden Druckräume ragende Differentialringkolben trägt, die sich nur in der neutralen Mittelstellung der Schaltbrücke an dem Kupplungsträger axial abstützen, während bei der Verschiebung der Schaltbrücke in eine Schaltstellung ein Differentialringkolben von einem ihm zugeordneten Mitnehmer der Schaltbrücke in den ihm zugeordneten Druckraum verschoben wird.

Um eine Kraftübertragung über Abdichtungen auf die Kupplungswelle zu vermeiden, ist es zweckmäßig, wenn in Schaltstellung der Schaltbrücke der entsprechende Differentialringkolben an der ihm zugewandten Kolbenfläche der Schaltbrücke anliegt.

Eine abgewandelte Ausführungsform kann erfindungsgemäß dadurch gekennzeichnet sein, daß die Schaltbrücke mit einem ringförmigen, radial nach innen ragenden, im Querschnitt etwa T-förmig ausgebildeten Doppelkolben in den die beiden Druckräume umschließenden Innenraum des Kupplungsträgers ragt und zwei einander axial gegenüberliegenden, jeweils in einen der beiden Druckräume ragenden Differentialringkolben zugeordnet ist, die sich nur in der neutralen Mittelstellung der Schaltbrücke an dem Kupplungsträger axial abstützen, während bei der Verschiebung der Schaltbrücke in eine Schaltstellung ein Differentialringkolben von einem ihm zugeordneten Mitnehmer der Schaltbrücke in den ihm zugeordneten Druckraum verschoben wird.

Bei den vorstehend beschriebenen Ausführungsformen ist es zweckmäßig, wenn für jeden der beiden Druckräume eine Druckölzufuhr durch die Kupplungswelle in Verbindung mit einer Drehdurchführung vorgesehen ist, wobei die Steuerung vorzugsweise über der Drehdurchführung vorgelagerte NO (NORMAL OPEN)-3/2-Wege-Magnetventile erfolgt. Dadurch läßt sich bei Schließung des Ventiles der hierdurch abgeschlossene Druckraum zu einem Öltank hin entleeren. Eine entsprechende Ventilschaltung läßt sich auch der DE 40 38 170 A1 entnehmen.

Ausgehend von der eingangs beschriebenen Schalt-Zahnkupplung wird die der Erfindung zugrundeliegende Aufgabe bei einer erfindungsgemäßen Alternativlösung auch dadurch gelöst, daß die Schalt-Zahnkupplung als koaxiale Doppel-Differentialkupplung ausgebildet ist, die eine auf ihren sich axial gegenüberliegenden Stirnseiten je eine Schaltverzahnung tragende Schaltbrücke aufweist, die über eine eine Momentenübertragung sowie eine Axialverschiebung ermöglichende Verzahnung mit einem rotierenden Getriebeteil, vorzugsweise einer Kupplungswelle in Drehverbindung steht und über ein die erforderliche Schaltkraft übertragendes Kugellager kinematisch mit einem Doppelkolben verbunden ist, der in einem gehäusefest angeordneten Kupplungsträger zwischen zwei von dem Kupplungsträger umschlossenen, jeweils separat gehäuseseitig ansteuerbaren Druckräumen axial verschiebbar gelagert ist, die bei gleichzeitiger Druckbeaufschlagung den Doppelkolben in seiner neutralen Mittelstellung halten bzw. in diese Mittelstellung verschieben, während die Einschaltung eines der beiden den Schaltverzahnungen zugeordneten Gängen durch Drucklosschaltung des dem anderen Gang zugeordneten Druckraumes erfolgt.

Bei allen Ausführungsformen kann es zweckmäßig sein, wenn der Winkel der Schaltverzahnung abweisend und ≤ dem Selbsthemmungswinkel ist; er kann grundsätzlich aber auch Null oder auch ≥ dem Selbsthemmungswinkel sein.

Eine erfindungsgemäß gestaltete Schalt-Zahnkupplung lässt sich vorteilhaft verwenden in einem hydrostatischen-mechanischen Lastschaltgetriebe, bestehend aus einem vierwelligen Zahnräder-Planetengetriebe und einem dazu parallel angeordneten, stufenlos einstellbaren hydrostatischen Getriebe, wobei nachgeschaltete Zahnrad-Stufen mit zugehörigen Schalt-Zahnkupplungen mehrere Gänge realisieren, in denen jeweils das hydrostatische Getriebe eine stufenlose Verstellung der Übersetzung des gesamten Getriebes bewirkt, wobei der Gangwechsel bei synchronen Drehzahlen, lastfrei und ohne Zugkraftunterbrechung erfolgt.

Weitere Merkmale der Erfindung sind Gegenstand der Unteransprüche und werden in Verbindung mit weiteren Vorteilen der Erfindung anhand von Ausführungsbeispielen näher erläutert.

In der Zeichnung zeigen die Figuren 1 und 1 A den Stand der Technik und die Figuren 2 bis 6 einige als Beispiele dienende Ausführungsformen der Erfindung. Es zeigen:
- **Figur 1**: ein Getriebekonzept;
- **Figur 1 A**: den auf die Antriebswelle bezogenen Verlauf der Drehzahl der Abtriebswelle;
- **Figur 2**: einen Querschnitt durch eine koaxiale Doppel-Differentialkupplung;
- **Figur 3**: die Ausführungsform gemäß Figur 2 mit einer Ventilsteuerung für die Öldruckzufuhr;
- **Figur 4**: eine abgewandelte Ausführungsform in einer Darstellung gemäß Figur 2;
- **Figur 5**: eine gegenüber der Ausführungsform gemäß Figur 2 etwas abgewandelte Lösung und
- **Figur 6**: eine abgewandelte Ausführungsform in einer Darstellung gemäß Figur 5.

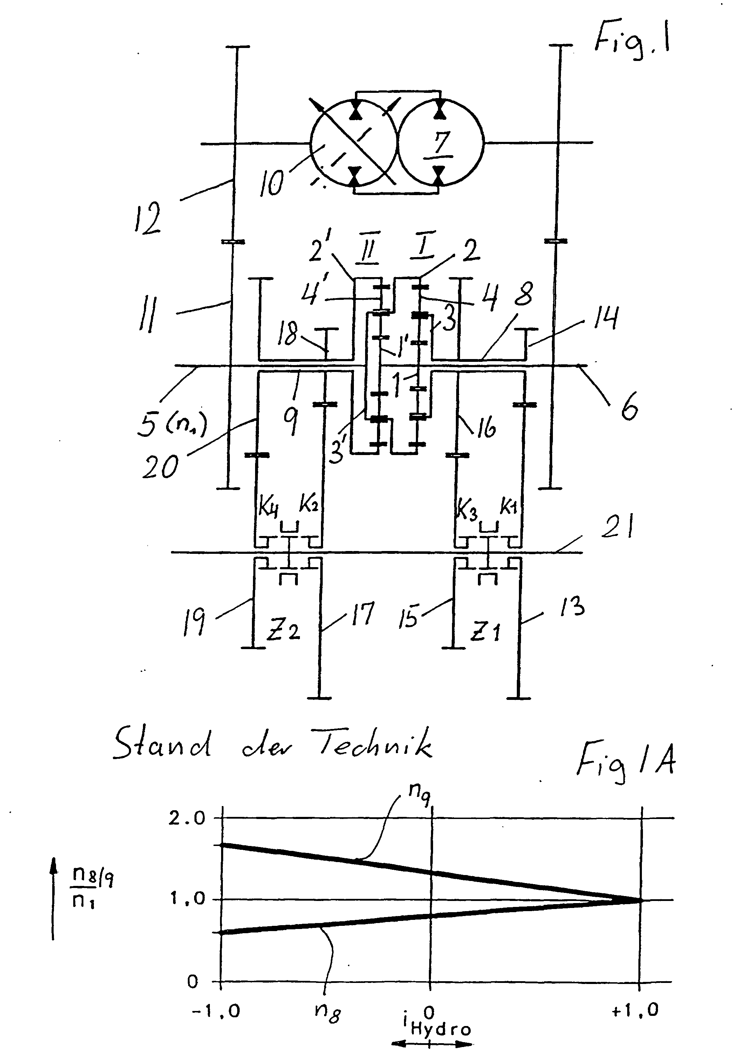

Figur 1 zeigt das Konzept eines vierwelligen Planetengetriebes, das aus einer Planetenstufe I mit einem Sonnenrad 1, einem Hohlrad 2 und einem Planetenradträger 3 mit Planetenrädern 4 und einer Planetenstufe II mit einem Sonnenrad 1', einem Hohlrad 2' und einem Planetenradträger 3' mit Planetenrädern 4' besteht. Der Planetenradträger 3' sowie das Hohlrad 2 bilden eine Antriebswelle 5; die Sonnenräder 1, 1' bilden eine Welle 6 für den Anschluß einer volumenkonstanten Verdrängermaschine 7; der Planetenradträger 3 bildet eine langsam laufende Koppelwelle 8; das Hohlrad 2' bildet eine schnell laufende Koppelwelle 9. Eine volumenverstellbare Verdrängermaschine 10 steht über Zahnräder 11, 12 mit der Antriebswelle 5 in Verbindung. Die Koppelwellen 8, 9 verhalten sich nach Figur 1 A so, daß sie bei einem Drehzahlverhältnis der Verdrängermaschinen n₇/n₁₀ = + 1 gleiche Drehzahlen aufweisen, und dass sie beim Verstellen des hydrostatischen Getriebes in Richtung n₇/n₁₀ = -1 ihre Drehzahlen so ändern, daß die Koppelwelle 9 stetig schneller und die Koppelwelle 8 stetig langsamer werden.

Eine Doppel-Schalt-Zahnkupplung Z1 kann den ersten Gang K₁ mit Zahnrädern 13, 14 oder den dritten Gang K₃ mit Zahnrädern 15, 16 und eine Doppel-Schalt-Zahnkupplung Z2 den zweiten Gang K₂ mit Zahnrädern 17, 18 oder den vierten Gang K₄ mit Zahnrädern 19, 20 mit einer Abtriebswelle 21 verbinden.

Die Kuppelwellen 8, 9 führen abwechselnd die Leistung vom An- zum Abtrieb. Der erste und dritte Gang gehören zur Koppelwelle 8 und der zweite und vierte Gang zur Koppelwelle 9.

Figur 1 A zeigt den auf die Antriebswelle 5 bezogenen Verlauf der Drehzahl der beiden Koppelwellen 8 und 9, abhängig vom bezogenen Verdrängungsvolumen der verstellbaren Verdrängermaschine.

Der Gangwechsel wird bei synchronen Drehzahlen der zu schließenden neuen Zahnkupplung eingeleitet. Diese neue Kupplung wird lastfrei eingeschaltet, während die alte leistungsführende Zahnkupplung noch eingeschaltet bleibt. Die Lastverlagerung von der alten auf die neue Kupplung erfolgt durch eine gezielte Volumenkorrektur des hydrostatischen Getriebes. Am Ende dieser Korrektur trägt die neue Kupplung die Last, und die alte Kupplung kann lastfrei ausgeschaltet werden.

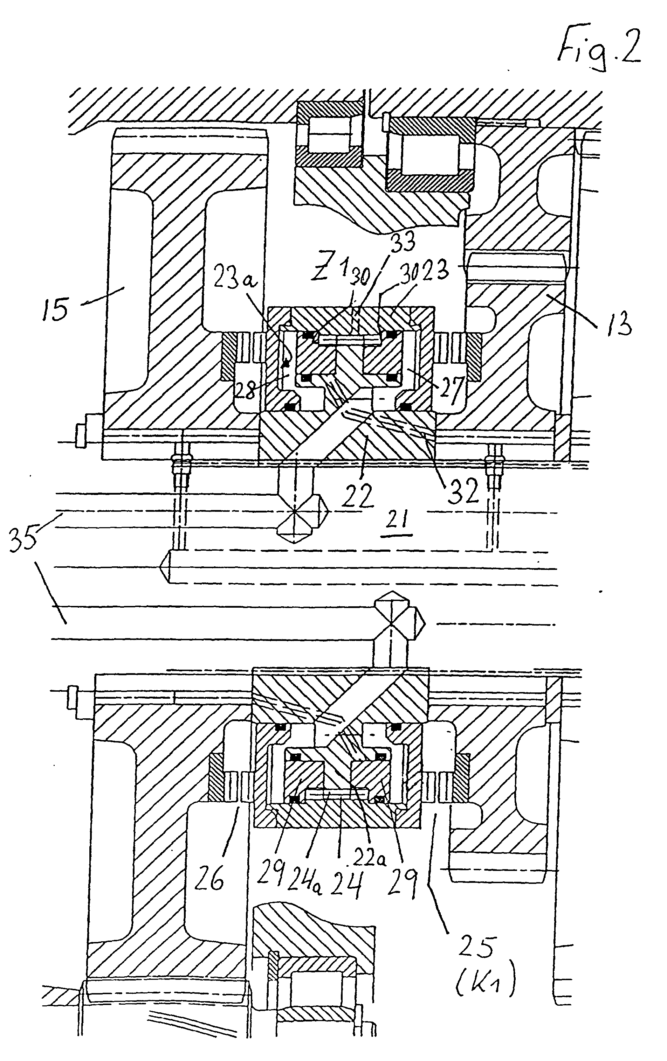

Figur 2 zeigt ein Ausführungsbeispiel für eine Schalt-Zahnkupplung Z1, Z2, die erfindungsgemäß als koaxiale Doppel-Differentialkupplung ausgebildet ist. Sie weist einen auf einer Kupplungswelle (Abtriebswelle 21 in Figur 1) drehfest und achsfest angeordneten Kupplungsträger 22 auf, auf dem ein doppelseitig mit einem Druckmittel beaufschlagbarer, als Schaltbrücke 23 ausgebildeter Doppelkolben gelagert ist. Letzterer steht über eine eine Momentenübertragung sowie eine Axialverschiebung ermöglichende Verzahnung 24 mit dem Kupplungsträger 22 in Wirkverbindung und trägt auf seinen sich axial gegenüberliegenden Stirnseiten je eine Schaltverzahnung 25, 26 mit einem abweisenden Winkel. Der Doppelkolben ist von zwei separat ansteuerbaren Druckräumen 27, 28 beaufschlagbar, die bei gleichzeitiger Druckbeaufschlagung die Schaltbrücke 23 in ihrer in Figur 2 gezeigten neutralen Mittelstellung halten bzw. in diese Mittelstellung verschieben, während die Einschaltung eines der beiden den Schaltverzahnungen 25, 26 zugeordneten Gängen (K₁, K₃ bzw. K₂, K₄) durch Drucklosschaltung des dem anderen Gang zugeordneten Druckraumes erfolgt.

Der Kupplungsträger 22 ragt mit einem Führungsabschnitt 22a zwischen die beiden von der Schaltbrücke 23 umschlossenen Druckräume 27, 28 und trägt zwei einander axial gegenüberliegende, jeweils in einen der beiden Druckräume 27, 28 ragenden Differentialringkolben 29. Die Differentialringkolben 29 stützen sich nur in der neutralen Mittelstellung der Schaltbrücke 23 an dem Kupplungsträger 22 axial ab, während bei der Verschiebung der Schaltbrücke 23 in eine Schaltstellung ein Differentialringkolben 29 von einem ihm zugeordneten Mitnehmer 30 der Schaltbrücke 23 in den ihm zugeordneten Druckraum 27 bzw. 28 verschoben wird. Dabei läßt Figur 2 erkennen, daß die genannten Mitnehmer 30 die Stirnseiten der Innenverzahnung 24a der Schaltbrücke 23 sind. Die Dimensionierung der Schaltbrücke 23 bzw. der von ihm umschlossenen Druckräume 27, 28 ist so vorgesehen, daß in Schaltstellung der Schaltbrücke 23 der entsprechende Differentialringkolben 29 an der ihm zugeordneten Kolbenfläche 23a anliegt.

Durch den Kupplungsträger 22 ist eine Schmierölbohrung 32 geführt, die im Bereich der genannten Verzahnung 24 mündet. Durch den radial außenliegenden Teil der Schaltbrücke 23 ist eine Entlüftungsbohrung 33 geführt, die zwischen den beiden Differentialringkolben 29 ausmündet.

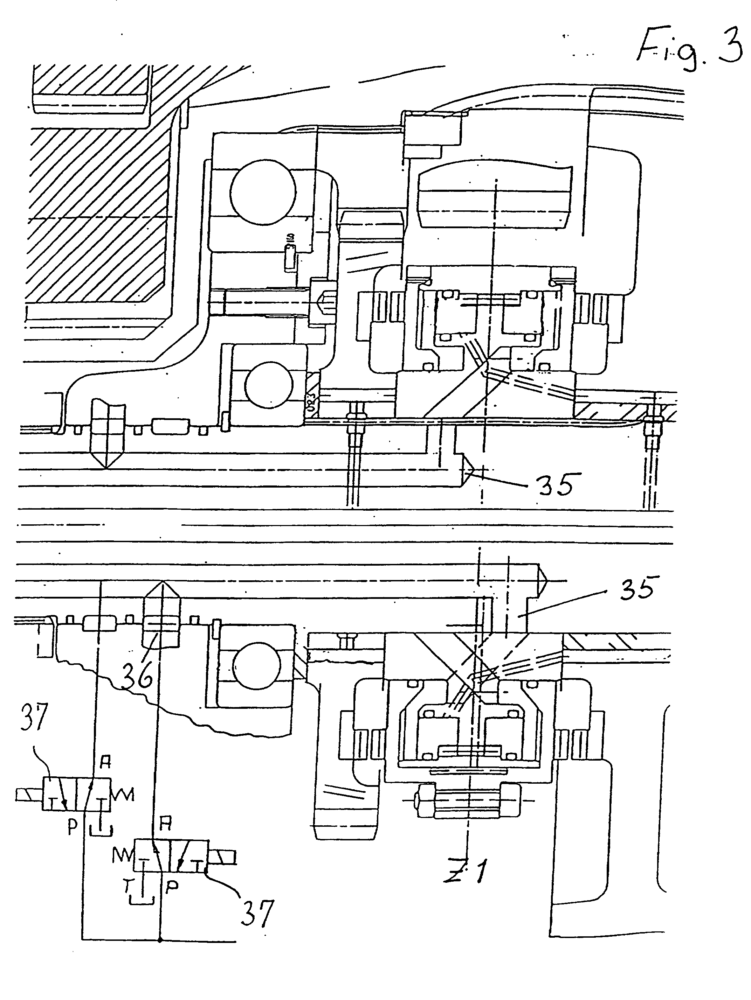

Für jeden der beiden Druckräume 27, 28 ist jeweils eine Druckölzufuhr 35 durch die Kupplungswelle 21 in Verbindung mit einer Drehdurchführung 36 vorgesehen. Die Steuerung erfolgt über der Drehdurchführung 36 vorgelagerte NO (NORMAL OPEN)-3/2-Wege-Magnetventile 37 (siehe Figur 3).

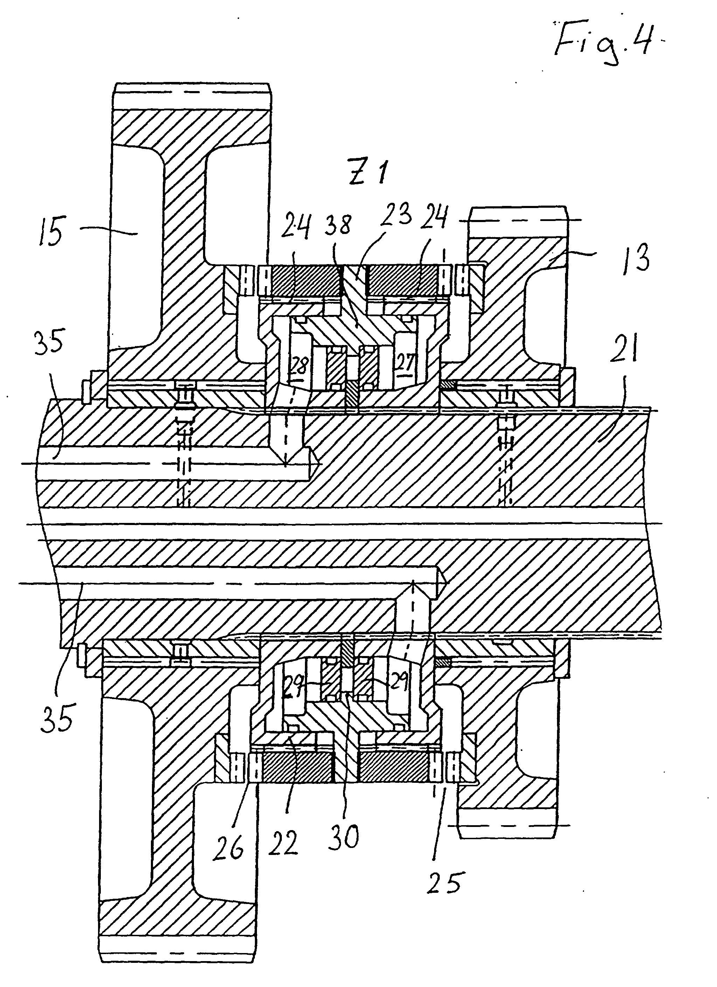

Figur 4 zeigt eine abgewandelte Ausführungsform, bei der die Schaltbrücke 23 mit einem ringförmigen, radial nach innen ragenden, im Querschnitt etwa T-förmig ausgebildeten Doppelkolben 38 in den die beiden Druckräume 27, 28 umschließenden Innenraum des Kupplungsträgers 22 ragt und zwei einander axial gegenüberliegenden, jeweils in einen der beiden Druckräume 27, 28 ragenden Differentialringkolben 29 zugeordnet ist. Letztere stützen sich nur in der neutralen Mittelstellung der Schaltbrücke 23 an dem Kupplungsträger 22 axial ab, während bei der Verschiebung der Schaltbrücke 23 in eine Schaltstellung ein Differentialringkolben 29 von einem ihm zugeordneten Mitnehmer 30 der Schaltbrücke 23 in den ihm zugeordneten Druckraum 27 bzw. 28 verschoben wird.

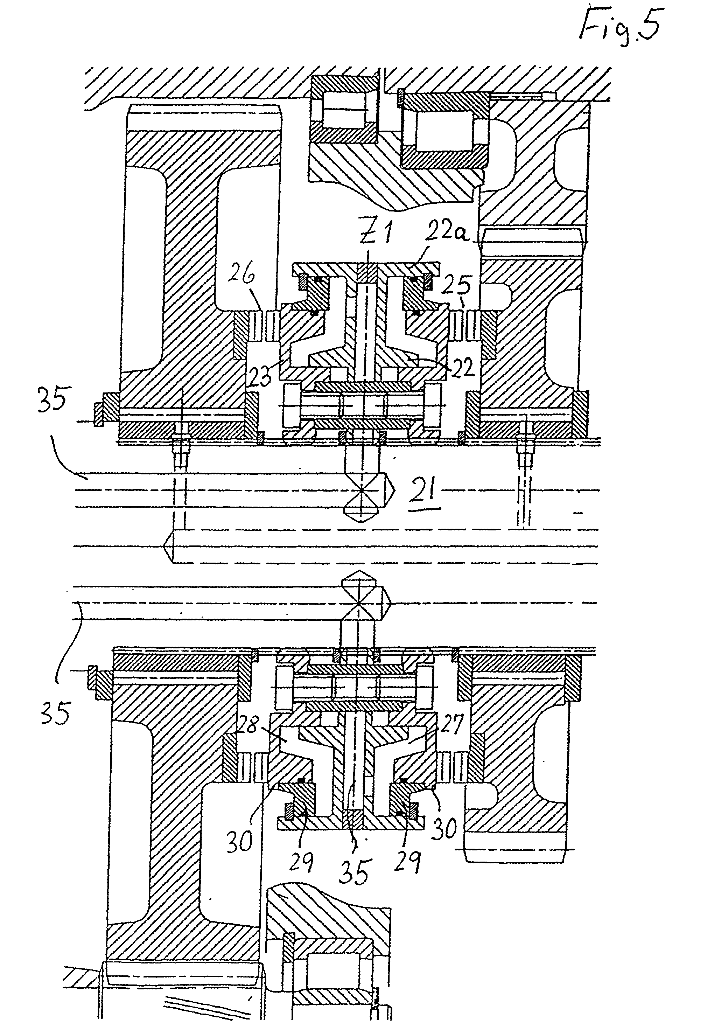

Die Ausführungsform gemäß Figur 5 entspricht im wesentlichen der der Figur 2. Jedoch ist der wellenfeste Kupplungsträger 22 durch die Schaltbrücke 23 radial nach außen durchgeführt und bildet hier einen äußeren Führungsabschnitt 22a für die beiden sich auf einer äußeren Ringfläche der Schaltbrücke 23 abstützenden Differentialringkolben 29. Die Druckölzufuhr 35 ist durch den Mittelsteg des Kupplungsträgers 22 hindurchgeführt.

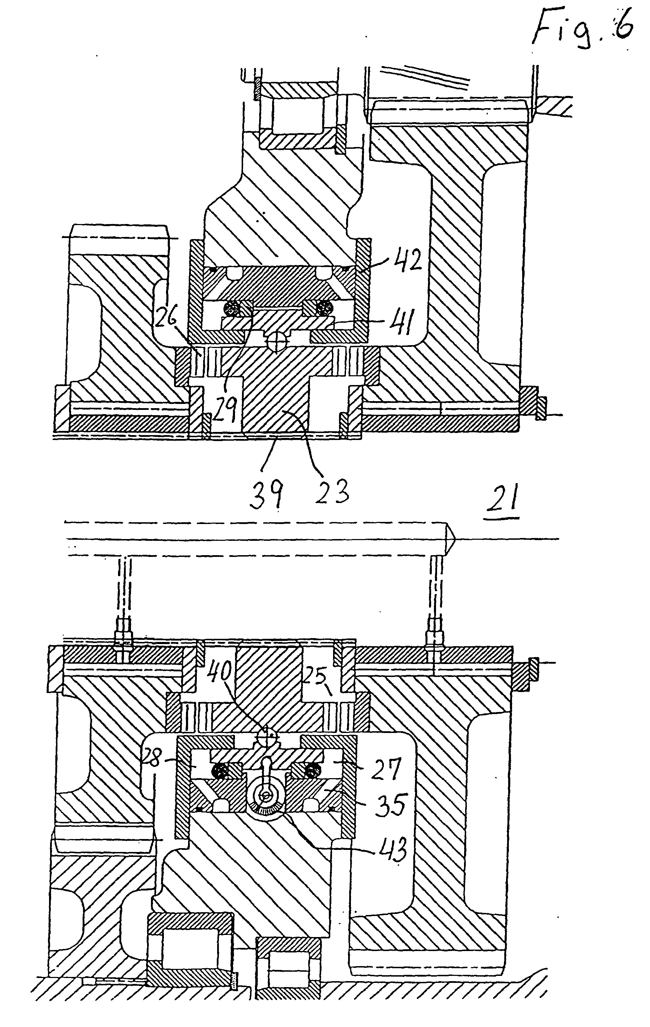

Figur 6 zeigt für die koaxiale Doppel-Differentialkupplung eine abgewandelte Ausführungsform, die eine auf ihren sich axial gegenüberliegenden Stirnseiten je eine Schaltverzahnung 25, 26 tragende Schaltbrücke 23 aufweist, die über eine eine Momentenübertragung sowie eine Axialverschiebung ermöglichende Verzahnung 39 mit der Kupplungswelle 21 in Drehverbindung steht. Die Schaltbrücke 23 ist über ein die erforderliche Schaltkraft übertragendes Kugellager 40 kinematisch mit einem Doppelkolben 41 verbunden, der in einem gehäusefest angeordneten Kupplungsträger 42 zwischen zwei von dem Kupplungsträger 42 umschlossenen, jeweils separat gehäuseseitig ansteuerbaren Druckräumen 27, 28 axial verschiebbar gelagert ist. Bei gleichzeitiger Druckbeaufschlagung halten die Druckräume 27, 28 den Doppelkolben 41 in seiner neutralen Mittelstellung bzw. sie schieben ihn in diese Mittelstellung, während die Einschaltung eines der beiden den Schaltverzahnungen 25, 26 zugeordneten Gängen K₁, K₃ bzw. K₂, K₄ durch Drucklosschaltung des dem anderen Gang zugeordneten Druckraumes erfolgt.

Der Doppelkolben 41 trägt zwei einander axial gegenüberliegende, jeweils einem der beiden Druckräume 27, 28 zugewandten Differentialringkolben 29, die sich nur in der in Figur 6 gezeigten neutralen Mittelstellung des Doppelkolbens 41 an dem Kupplungsträger 42 axial abstützen, während bei der Verschiebung des Doppelkolbens 41 in eine Schaltstellung der Schaltbrücke 23 ein Differentialringkolben 29 von einem ihm zugeordneten Mitnehmer 30 des Doppelkolbens 41 in den ihm zugeordneten Druckraum 27 bzw. 28 verschoben wird.

Figur 6 läßt in der unteren Darstellung ferner erkennen, daß der Doppelkolben 41 mit einem gehäusefesten Wegsensor 43 gekuppelt ist.

## Patentansprüche

1. Schalt-Zahnkupplung in einem leistungsverzweigten Lastschaltgetriebe, in dem einer stufenlosen Drehzahlverstellvorrichtung mehrere mittels zumindest einer Schalt-Zahnkupplung schaltbare Gangstufen nachgeordnet sind und der Gangwechsel bei annähernd synchronen Abtriebs-Drehzahlen der zu schaltenden Gänge erfolgt, **dadurch gekennzeichnet, dass** die Schalt-Zahnkupplung (Z1, Z2) als koaxiale Doppel-Differentialkupplung ausgebildet ist, die einen auf einem rotierenden Getriebeteil, vorzugsweise einer Kupplungswelle (21) drehfest und achsfest angeordneten Kupplungsträger (22) aufweist, auf dem ein doppelseitig mit einem Druckmittel beaufschlagbarer, als Schaltbrücke (23) ausgebildeter Doppelkolben gelagert ist, der über eine eine Momentenübertragung sowie eine Axialverschiebung ermöglichende Verzahnung (24) mit dem Kupplungsträger (22) in Wirkverbindung steht, auf seinen sich axial gegenüberliegenden Stirnseiten je eine Schaltverzahnung (25, 26) trägt und von zwei separat ansteuerbaren Druckräumen (27, 28) beaufschlagbar ist, die bei gleichzeitiger Druckbeaufschlagung die Schaltbrücke (23) in ihrer neutralen Mittelstellung halten bzw. in diese Mittelstellung verschieben, während die Einschaltung eines der beiden den Schaltverzahnungen (25, 26) zugeordneten Gängen (K₁, K₃ bzw. K₂, K₄) durch Drucklosschaltung des dem anderen Gang zugeordneten Druckraumes erfolgt.

2. Schalt-Zahnkupplung nach Anspruch 1, **dadurch gekennzeichnet, dass** der Kupplungsträger (22) mit einem Führungsabschnitt (22a) zwischen die beiden von der Schaltbrücke (23) umschlossenen Druckräume (27, 28) ragt und zwei einander axial gegenüberliegende, jeweils in einen der beiden Druckräume (27, 28) ragende Differentialringkolben (29) trägt, die sich nur in der neutralen Mittelstellung der Schaltbrücke (23) an dem Kupplungsträger (22) axial abstützen, während bei der Verschiebung der Schaltbrücke (23) in eine Schaltstellung ein Differentialringkolben (29) von einem ihm zugeordneten Mitnehmer (30) der Schaltbrücke (23) in den ihm zugeordneten Druckraum (27 bzw. 28) verschoben wird.

3. Schalt-Zahnkupplung nach Anspruch 2, **dadurch gekennzeichnet, dass** die genannten Mitnehmer (30) die Stirnseiten der Innenverzahnung (24a) der Schaltbrücke (23) sind.

4. Schalt-Zahnkupplung nach Anspruch 2 oder 3, **dadurch gekennzeichnet, dass** in Schaltstellung der Schaltbrücke (23) der entsprechende Differentialringkolben (29) an der ihm zugewandten Kolbenfläche (23a) der Schaltbrücke (23) anliegt.

5. Schalt-Zahnkupplung nach einem der vorhergehenden Ansprüche, **dadurch gekennzeichnet, dass** durch den Kupplungsträger (22) eine Schmierölbohrung (32) geführt ist, die im Bereich der genannten Verzahnung (24) mündet.

6. Schalt-Zahnkupplung nach einem der vorhergehenden Ansprüche, **dadurch gekennzeichnet, dass** durch den radial außenliegenden Teil der Schaltbrücke (23) eine Entlüftungsbohrung (33) geführt ist, die zwischen den beiden Differentialringkolben (29) ausmündet.

7. Schalt-Zahnkupplung nach Anspruch 1, **dadurch gekennzeichnet, dass** die Schaltbrücke (23) mit einem ringförmigen, radial nach innen ragenden, im Querschnitt etwa T-förmig ausgebildeten Doppelkolben (38) in den die beiden Druckräume (27, 28) umschließenden Innenraum des Kupplungsträgers (22) ragt und zwei einander axial gegenüberliegenden, jeweils in einen der beiden Druckräume (27, 28) ragenden Differentialringkolben (29) zugeordnet ist, die sich nur in der neutralen Mittelstellung der Schaltbrücke (23) an dem Kupplungsträger (22) axial abstützen, während bei der Verschiebung der Schaltbrücke (23) in eine Schaltstellung ein Differentialringkolben (29) von einem ihm zugeordneten Mitnehmer (30) der Schaltbrücke (23) in den ihm zugeordneten Druckraum (27 bzw. 28) verschoben wird.

8. Schalt-Zahnkupplung nach einem der vorhergehenden Ansprüche, **dadurch gekennzeichnet, dass** für jeden der beiden Druckräume (27, 28) eine Druckölzufuhr (35) durch die Kupplungswelle (21) in Verbindung mit einer Drehdurchführung (36) vorgesehen ist.

9. Schalt-Zahnkupplung nach Anspruch 8, **dadurch gekennzeichnet, dass** die Steuerung über der Drehdurchführung (36) vorgelagerte NO-3/2-Wege-Magnetventile (37) erfolgt.

10. Schalt-Zahnkupplung in einem leistungsverzweigten Lastschaltgetriebe, in dem einer stufenlosen Drehzahlverstellvorrichtung mehrere mittels zumindest einer Schalt-Zahnkupplung schaltbare Gangstufen nachgeordnet sind und der Gangwechsel bei annähernd synchronen Abtriebs-Drehzahlen der zu schaltenden Gänge erfolgt, **dadurch gekennzeichnet, dass** die Schalt-Zahnkupplung (Z1, Z2) als koaxiale Doppel-Differentialkupplung ausgebildet ist, die eine auf ihren sich axial gegenüberliegenden Stirnseiten je eine Schaltverzahnung (25, 26) tragende Schaltbrücke (23) aufweist, die über eine eine Momentenübertragung sowie eine Axialverschiebung ermöglichende Verzahnung (39) mit einem rotierenden Getriebeteil, vorzugsweise einer Kupplungswelle (21) in Drehverbindung steht und über ein die erforderliche Schaltkraft übertragendes Kugellager (40) kinematisch mit einem Doppelkolben (41) verbunden ist, der in einem gehäusefest angeordneten Kupplungsträger (42) zwischen zwei von dem Kupplungsträger (42) umschlossenen, jeweils separat gehäuseseitig ansteuerbaren Druckräumen (27, 28) axial verschiebbar gelagert ist, die bei gleichzeitiger Druckbeaufschlagung den Doppelkolben (41) in seiner neutralen Mittelstellung halten bzw. in diese Mittelstellung verschieben, während die Einschaltung eines der beiden den Schaltverzahnungen (25, 26) zugeordneten Gängen (K₁, K₃ bzw. K₂, K₄) durch Drucklosschaltung des dem anderen Gang zugeordneten Druckraumes erfolgt.

11. Schalt-Zahnkupplung nach Anspruch 10, **dadurch gekennzeichnet, dass** der Doppelkolben (41) zwei einander axial gegenüberliegende, jeweils einem der beiden Druckräume (27, 28) zugewandten Differentialringkolben (29) trägt, die sich nur in der neutralen Mittelstellung des Doppelkolbens (41) an den Kupplungsträgern (42) axial abstützen, während bei der Verschiebung des Doppelkolbens (41) in eine Schaltstellung der Schaltbrücke (23) ein Differentialringkolben (29) von einem ihm zugeordneten Mitnehmer (30) des Doppelkolbens (41) in den ihm zugeordneten Druckraum (27 bzw. 28) verschoben wird.

12. Schalt-Zahnkupplung nach Anspruch 11, **dadurch gekennzeichnet, dass** der Doppelkolben (41) mit einem gehäusefesten Wegsensor (43) gekuppelt ist.

13. Schalt-Zahnkupplung nach einem der vorhergehenden Ansprüche, **gekennzeichnet durch** ihre Verwendung in einem hydrostatisch-mechanischen Lastschaltgetriebe, bestehend aus einem vierwelligen Zahnräder-Planetengetriebe und einem dazu parallel angeordneten, stufenlos einstellbaren hydrostatischen Getriebe, wobei nachgeschaltete Zahnrad-Stufen mit zugehörigen Schalt-Zahnkupplungen (Z1, Z2) mehrere Gänge realisieren, in denen jeweils das hydrostatische Getriebe eine stufenlose Verstellung der Übersetzung des gesamten Getriebes bewirkt, wobei der Gangwechsel bei synchronen Drehzahlen, lastfrei und ohne Zugkraftunterbrechung erfolgt.

## Claims

1. Toothed selector clutch in a split-torque power-shift transmission in which a plurality of gearwheel stages which can be shifted by means of at least one toothed selector clutch are arranged downstream of an infinitely variable rotational speed adjustment device, and the change of gear speed takes place when the output speed of the gear speeds to be shifted are approximately synchronous, **characterized in that** the toothed selector clutch (Z1, Z2) is designed as a coaxial double differential clutch which has a clutch carrier (22) which is arranged in a rotationally and axially fixed manner on a rotating transmission component, preferably a clutch shaft (21), and on which is mounted a double piston, which can be subjected to a pressure medium on both sides, is designed as a shift bridge (23), is connected operatively to the clutch carrier (22) by toothing (24) which allows torque transmission and axial displacement, carries shift toothing (25, 26) on each of its axially opposite ends and can be acted upon from two separately controllable pressure spaces (27, 28) which, when subjected to pressure simultaneously, hold the shift bridge (23) in its neutral, central position or displace it into this central position, while the engagement of one of the two gears (K₁, K₃ or K₂, K₄) assigned to the shift toothings (25, 26) is performed by depressurization of the pressure space assigned to the other gear.

2. Toothed selector clutch according to Claim 1, **characterized in that** the clutch carrier (22) projects with a guide portion (22a) between the two pressure spaces (27, 28) surrounded by the shift bridge (23) and carries two annular differential pistons (29), which are situated axially opposite one another, each projecting into one of the two pressure spaces (27, 28), and are supported axially against the clutch carrier (22) only in the neutral, central position of the shift bridge (23), while, when the shift bridge (23) is displaced into a shift position, an annular differential piston (29) is displaced by an associated drive feature (30) of the shift bridge (23) into the associated pressure space (27 or 28).

3. Toothed selector clutch according to Claim 2, **characterized in that** said drive features (30) are the ends of the internal toothing (24a) of the shift bridge (23).

4. Toothed selector clutch according to Claim 2 or 3, **characterized in that**, in the shift position of the shift bridge (23), the corresponding annular differential piston (29) rests against that piston face (23a) of the shift bridge (23) which faces it.

5. Toothed selector clutch according to one of the preceding claims, **characterized in that** the clutch carrier (22) has passed through it a lubricating-oil hole (32) which ends in the region of said toothing (24).

6. Toothed selector clutch according to one of the preceding claims, **characterized in that** a bleed hole (33), which opens between the two annular differential pistons (29), is passed through the radially outer part of the shift bridge (23).

7. Toothed selector clutch according to Claim 1, **characterized in that** the shift bridge (23) projects with an annular, radially inward-projecting double piston (38) of approximately T-shaped cross section into the interior of the clutch carrier (22) surrounding the two pressure spaces (27, 28) and is assigned to two annular differential pistons (29) which are situated axially opposite one another, each project into one of the two pressure spaces (27, 28) and are supported axially against the clutch carrier (22) only in the neutral, central position of the shift bridge (23), while, when the shift bridge (23) is displaced into a shift position, an annular differential piston (29) is displaced by an associated drive feature (30) of the shift bridge (23) into the associated pressure space (27 or 28).

8. Toothed selector clutch according to one of the preceding claims, **characterized in that** a pressurized-oil feed (35) through the clutch shaft (21) in conjunction with a rotating joint (36) is provided for each of the two pressure spaces (27, 28).

9. Toothed selector clutch according to Claim 8, **characterized in that** control is exercised by means of NO 3/2-way solenoid valves (37) arranged upstream of the rotating joint (36).

10. Toothed selector clutch in a split-torque power-shift transmission in which a plurality of gearwheel stages which can be shifted by means of at least one toothed selector clutch are arranged downstream of an infinitely variable rotational speed adjustment device, and the change of gear speed takes place when the output speed of the gear speeds to be shifted are approximately synchronous, **characterized in that** the toothed selector clutch (Z1, Z2) is designed as a coaxial double differential clutch which has a shift bridge (23) which bears respective shift toothing (25, 26) on its axially opposite ends, is connected rotationally by toothing (39) which allows torque transmission and axial displacement to a rotating transmission component, preferably a clutch shaft (21), and is connected kinematically, by a ball bearing (40) which transmits the required shifting force, to a double piston (41) which is mounted in a clutch carrier (42), arranged in a manner fixed relative to the casing, in such a way that it can be displaced axially between two pressure spaces (27, 28) which are surrounded by the clutch carrier (42), can each be controlled separately from the casing side and, when simultaneously pressurized, hold the double piston (41) in its neutral, central position or displace it into this central position, while the engagement of one of the two gears (K₁, K₃ or K₂, K₄) assigned to the shift toothings (25, 26) is performed by depressurization of the pressure space assigned to the other gear.

11. Toothed selector clutch according to Claim 10, **characterized in that** the double piston (41) carries two annular differential pistons (29), which are situated axially opposite one another, each face one of the two pressure spaces (27, 28) and are supported axially against the clutch carriers (42) only in the neutral, central position of the double piston (41), while, when the double piston (41) is displaced into a shift position of the shift bridge (23), an annular differential piston (29) is displaced by an associated drive feature (30) of the double piston (41) into the associated pressure space (27 or 28).

12. Toothed selector clutch according to Claim 11, **characterized in that** the double piston (41) is coupled to a displacement sensor (43) fixed relative to the casing.

13. Toothed selector clutch according to one of the preceding claims, **characterized by** its use in a hydrostatic/mechanical power-shift transmission comprising a four-shaft epicyclic-gearwheel transmission and an infinitely variable hydrostatic transmission arranged in parallel with the latter, downstream gearwheel stages with associated toothed selector clutches (Z1, Z2) providing a plurality of gears, in which in each case the hydrostatic transmission effects infinite variation of the transmission ratio of the overall transmission, the gear change taking place at synchronous speeds, in a load-free manner and without interruption in the tractive effort.

## Revendications

1. Accouplement denté d'enclenchement dans une boîte de vitesses à enclenchement sous charge et ramification de la puissance, dans laquelle plusieurs rapports de vitesse pouvant être enclenchés au moyen d'au moins un accouplement denté d'enclenchement sont disposés derrière un dispositif de variation continue du régime de rotation, et le changement de rapport s'effectue à régimes de sortie sensiblement synchrones des rapports à enclencher, **caractérisé en ce que** l'accouplement denté d'enclenchement (Z1, Z2) est réalisé en accouplement différentiel double coaxial qui comprend un porte-accouplement (22) monté solidaire en rotation et axialement sur une pièce tournante de la boîte, de préférence un arbre d'accouplement (21), porte-accouplement sur lequel est supporté un piston double réalisé en tant que pont d'enclenchement (23), lequel piston double peut recevoir l'action d'un fluide de pression sur deux cotés, est en liaison fonctionnelle avec le porte-accouplement (22) par une denture (24) permettant une transmission de couple ainsi qu'un coulissement axial, porte une denture d'enclenchement (25, 26) sur chacune de ses faces frontales axialement opposées, et peut être soumis à l'action de deux chambres de pression (27, 28) pouvant être commandées séparément, qui maintiennent ou selon les cas ramènent le pont d'enclenchement (23) dans sa position centrale de point mort lorsqu'elles sont simultanément mises en pression, tandis que l'enclenchement de l'un des deux rapports (K1, K3 ou respectivement K2, K4) associés aux dentures d'enclenchement (25, 26) s'effectue par coupure de la pression dans la chambre de pression associée à l'autre rapport.

2. Accouplement denté d'enclenchement selon la revendication 1, **caractérisé en ce que** le porte-accouplement (22) comporte une partie de guidage (22a) prenant place entre les deux chambres de pression (27, 28) entourées par le pont d'enclenchement (23), et porte deux pistons annulaires différentiels (29) axialement opposés l'un à l'autre qui prennent place chacun dans l'une des deux chambres de pression (27, 28), ne s'appuient axialement sur le porte-accouplement (22) que dans la position centrale de point mort du pont d'enclenchement (23), tandis que lorsque le pont d'enclenchement (23) passe dans une position d'enclenchement, un piston annulaire différentiel (29) s'enfonce dans la chambre de pression qui lui est associée (27, respectivement 28) en s'écartant d'un entraîneur (30) qui lui est associé, appartenant au pont d'enclenchement (23).

3. Accouplement denté d'enclenchement selon la revendication 2, **caractérisé en ce que** les entraîneurs précités (30) sont les faces d'extrémité de la denture intérieure (24a) du pont d'enclenchement (23).

4. Accouplement denté d'enclenchement selon la revendication 2 ou 3, **caractérisé en ce que** lorsque le pont d'enclenchement (23) est en position d'enclenchement, le piston annulaire différentiel correspondant (29) est adjacent à la face de piston (23a) du pont d'enclenchement (23) tournée vers ce piston annulaire.

5. Accouplement denté d'enclenchement selon l'une des revendications précédentes, **caractérisé en ce qu'**un alésage d'huile de lubrification (32) s'étendant à travers le porte-accouplement (22) débouche dans la zone de la denture précitée (24).

6. Accouplement denté d'enclenchement selon l'une des revendications précédentes, **caractérisé en ce qu'**un alésage d'évent (33) s'étendant à travers la partie radialement extérieure du pont d'enclenchement (23) débouche entre les deux pistons annulaires différentiels (29).

7. Accouplement denté d'enclenchement selon la revendication 1, **caractérisé en ce que** le pont d'enclenchement (23) porte un piston double (38) annulaire, sensiblement en forme de T en coupe transversale, qui s'avance radialement vers l'intérieur dans l'espace intérieur du porte-accouplement (22) renfermant les deux chambres de pression (27, 28), et **en ce qu'**au pont d'enclenchement sont associés deux pistons annulaires différentiels (29) axialement opposés l'un à l'autre qui prennent place chacun dans l'une des deux chambres de pression (27, 28), qui ne s'appuient axialement sur le porte-accouplement (22) que dans la position centrale de point mort du pont d'enclenchement (23), tandis que lorsque le pont d'enclenchement (23) passe dans une position d'enclenchement, un piston annulaire différentiel (29) s'enfonce dans la chambre de pression qui lui est associée (27, respectivement 28) en s'écartant d'un entraîneur (30) qui lui est associé, appartenant au pont d'enclenchement (23)

8. Accouplement denté d'enclenchement selon l'une des revendications précédentes, **caractérisé en ce qu'**il est prévu pour chacune des deux chambres de pression (27, 28) une amenée (35) d'huile sous pression à travers l'arbre d'accouplement (21) en liaison avec un raccord tournant (36).

9. Accouplement denté d'enclenchement selon la revendication 8, **caractérisé en ce que** la commande s'effectue par l'intermédiaire d'électrovannes (37) à trois/deux voies normalement ouvertes, placées en amont du raccord tournant (36).

10. Accouplement denté d'enclenchement dans une boîte de vitesses à enclenchement sous charge et ramification de la puissance, dans laquelle plusieurs rapports de vitesse pouvant être enclenchés au moyen d'au moins un accouplement denté d'enclenchement sont disposés derrière un dispositif de variation continue du régime de rotation, et le changement de rapport s'effectue à régimes de sortie sensiblement synchrones des rapports à enclencher, **caractérisé en ce que** l'accouplement denté d'enclenchement (Z1, Z2) est réalisé en accouplement différentiel double coaxial, qui comprend un pont d'enclenchement (23) portant une denture d'enclenchement (25, 26) sur chacune de ses faces frontales opposées, lequel pont est lié en rotation avec une pièce tournante de la boîte, de préférence un arbre d'accouplement (21), par une denture (39) permettant une transmission de couple ainsi qu'un coulissement axial, et est relié cinématiquement, par un palier à billes (40) transmettant la force d'enclenchement nécessaire, avec un piston double (41) qui est monté coulissant dans un porte-accouplement (42) solidaire du carter, entre deux chambres de pression (27, 28) entourées par le porte-accouplement (42), pouvant être commandées séparément côté carter, qui maintiennent ou selon les cas ramènent le piston double (41) dans sa position centrale de point mort lorsqu'elles sont simultanément mises en pression, tandis que l'enclenchement de l'un des deux rapports (K1, K3 ou respectivement K2, K4) associés aux dentures d'enclenchement (25, 26) s'effectue par coupure de la pression dans la chambre de pression associée à l'autre rapport.

11. Accouplement denté d'enclenchement selon la revendication 10, **caractérisé en ce que** le piston double (41) porte deux pistons annulaires différentiels (29) axialement opposés l'un à l'autre, tournés chacun vers l'une des deux chambres de pression (27, 28), lesquels pistons ne s'appuient axialement sur les porte-accouplement (42) que dans la position centrale de point mort du piston double (41), tandis que lorsque le piston double (41) passe en une position d'enclenchement du pont d'enclenchement (23), un piston annulaire différentiel (29) s'enfonce dans la chambre de pression qui lui est associée (27, respectivement 28) en s'écartant d'un entraîneur qui lui est associé (30), appartenant au piston double (41).

12. Accouplement denté d'enclenchement selon la revendication 11, **caractérisé en ce que** le piston double (41) est couplé à un détecteur de course (43) fixé au carter (13).

13. Accouplement denté d'enclenchement selon l'une des revendications précédentes, **caractérisé par** son utilisation dans une boîte de vitesses hydrostatique-mécanique constituée d'une boîte de vitesses planétaire à roues dentées à quatre arbres, et d'une boîte de vitesses hydrostatique réglable de façon continue, montée en parallèle, des rapports de pignonnerie installés en aval réalisant avec des accouplements dentés d'enclenchement (Z1, Z2) associés plusieurs rapports dans chacun desquels la boîte hydrostatique assure une variation continue du rapport de transmission de l'ensemble de la boîte de vitesses, le changement de vitesses ayant lieu à des régimes synchrones, hors charge et sans interruption de la force motrice.
